# EUROPEAN PATENT APPLICATION

(11) **EP 3 747 530 A1**
(43) Date of publication of application: **09.12.2020**
(21) Application number: 19178820.7
(22) Date of filing: 06.06.2019
(51) Int. Cl.: B01D 53/14, C01B 7/07, C23G 1/36

(54) **SYSTEM FOR CLEANING AN OFF-GAS, COMPRISING AN ACID COMPONENT, AND/OR FOR REGENERATING AN ACID COMPONENT COMPRISED IN AN OFF-GAS, METHOD**

(71) Applicant: CMI UVK GmbH, 56410 Montabaur (DE)
(72) Inventor: FABER, Sergej, 65594 Runkel (DE); QUIRMBACH, Arno, 56424 Moschheim (DE)
(74) Representative: Schwöbel, Thilo K.

(57) **Abstract**

The present invention relates to a system for cleaning an off-gas (10) comprising an acid component (30) and/or for regenerating an acid component (30) comprised in an off-gas (10), especially for an off-gas of a hydrolysis reactor for processing an acid solution comprising an iron salt, wherein the system comprises a absorber element (1), wherein the system is configured such that the off-gas (10) is fed to the absorber element (1), wherein the absorber element (1) is configured such that - in the absorber element (1) - at least part of the acid component (30) is removed from the off-gas (10),
wherein the system comprises a cooler element (2), wherein the system is configured such that a first resulting off-gas (11), exiting the absorber element (1), is fed to the cooler element (2), wherein the cooler element (2) is configured such that - in the cooler element (2) - the first resulting off-gas (11) is cooled.

## Description

### BACKGROUND

The present invention relates to a system for cleaning an off-gas, comprising an acid component, and/or for regenerating an acid component comprised in an off-gas, especially for an off-gas of a hydrolysis reactor for processing an acid solution comprising an iron salt.

Furthermore, the present invention relates to a method for cleaning an off-gas comprising an acid component and/or for regenerating an acid component comprised in an off-gas, especially for an off-gas of a hydrolysis reactor for processing an acid solution comprising an iron salt.

In a number of industrial fields - such as the iron and steel industry, the zinc plating industry etc. -, metal waste acid solutions containing iron components and potentially non-ferrous metals arise during fabrication processes. In particular, such acid solutions arise in various technological processes, such as pickling processes and separation processes of different metal components contained in ores. In case the acid solutions are unwanted byproducts of an industrial process, they have been disposed of or stored as industrial waste for a long time. In recent years, the costs of disposal or treatment of such industrial waste have increased. Moreover, the involved acids themselves are comparably expensive. Therefore, recovery processes for the involved acids - especially for hydrochloric acid - have been introduced in recent years.

For instance, for a pickling sludge, a pyrohydrolysis can be performed in a reactor/furnace, such as a spray roaster or a fluidized bed reactor. Thereby, solid iron oxide as well as an off-gas (or effluent gas), comprising evaporated acid, are obtained. Said off-gas needs to be washed/cleaned and cooled before it can be released into the environment. At the same time, it is desirable to gather the acid that is comprised in the off-gas such that it may be stored and/or reused.

Consequently, further improved processes for cleaning an off-gas, comprising an acid component, and/or for regenerating an acid component comprised in an off-gas are desirable.

### SUMMARY

It is therefore an object of the present invention to provide an efficient system for cleaning an off-gas, comprising an acid component, and/or for regenerating an acid component comprised in an off-gas, especially for an off-gas of a hydrolysis reactor for processing an acid solution comprising an iron salt, which preferably may be flexibly adapted to the available space and conditions on site.

This objective is achieved by a system for cleaning an off-gas comprising an acid component and/or for regenerating an acid component comprised in an off-gas, especially for an off-gas of a hydrolysis reactor for processing an acid solution comprising an iron salt, wherein the system comprises a absorber element, wherein the system is configured such that the off-gas is fed to the absorber element, wherein the absorber element is configured such that - in the absorber element - at least part of the acid component is removed from the off-gas,
wherein the system comprises a cooler element, wherein the system is configured such that a first resulting off-gas, exiting the absorber element, is fed to the cooler element, wherein the cooler element is configured such that - in the cooler element - the first resulting off-gas is cooled.

It is therefore advantageously possible according to the present invention that a absorber element and a cooler element are employed for processing the off-gas. Thereby it is possible that washing the off-gas as well the regenerating the acid component may (mostly) take place in the absorber element, while further cooling of the off-gas may take place in the cooler element. Accordingly, it is possible to achieve a spatial separation of said (main) acid regeneration and the final cooling of the off-gas such that an improved adaption to the local conditions on site may be achieved. For instance, it is possible that the absorber element (especially configured for washing the off-gas and/or removing at least part of the acid component from the off-gas) is located close to a reactor (such as a hydrolysis reactor), while the cooler element is located further away, such that a (final) cooling the off-gas and a potential release of the cleaned off-gas into the environment are spatially separated from the reactor.

Advantageously, the inventive system can be applied to off-gases resulting from a hydrolysis, in particular pyrohydrolysis, of a plurality of different waste acid solutions, e.g., resulting from waste metal materials such as precipitation products or leaching products of industrial processes.

According to the present invention, it is especially conceivable that the acid component comprises hydrochloric acid, HCI, or that the acid component is HCI.

According to the present invention, it is especially conceivable that the acid solution processed in the reactor comprises ferric chloride, FeCl₃, and/or ferrous chloride, FeCl₂, (as the iron salt).

According to the present invention, it is conceivable that a gas flow of the first resulting off-gas from the absorber element to the cooler element is established by means of a pressure difference or pressure gradient.

According to the present invention, it is conceivable that the first resulting off-gas is the off-gas which results from treating/processing the off-gas in the absorber element.

According to the present invention, it is conceivable that the second resulting off-gas is the off-gas which results from treating/processing the first resulting off-gas in the cooler element.

Embodiments of the present invention are described in the dependent claims.

According to an embodiment of the present invention, it is preferred that the absorber element (1) and the cooler element (2) are arranged separately from each other, and wherein preferably the cooler element (2) is positioned between the absorber element (1) and a scrubber element (3).

Thereby, it is advantageously possible according to an embodiment of the present invention that the cleaning of the off-gas as well the regeneration of the acid component mostly take place in the absorber element which is arranged separately and from the cooler element.

Additionally or alternatively, it is conceivable that a gas-connection between the absorber element and the cooler element comprises at least a tube or a pipe such that the absorber element and the cooler element are connected to each other by means of the tube or pipe. It is conceivable that the gas-connection is arranged such that the first resulting off-gas, exiting the absorber element only traverses the gas-connection before entering the cooler element. Alternatively, it is possible that the first resulting off-gas is guided through further apparatuses (or only one further apparatus) after exiting the absorber element and before entering the cooler element.

According to an embodiment of the present invention, it is preferred that the system is configured such that a second resulting off-gas, exiting the cooler element, is fed to a scrubber element (or venturi scrubber), especially a venturi scrubber, for removing particles and/or liquid drops from the second resulting off-gas, especially before releasing the second resulting off-gas into the environment.

Thereby, it is possible according to an embodiment of the present invention that by means of a scrubber element (or venturi scrubber), preferably a venturi scrubber, a fine washing is performed after the off-gas stream exits/leaves the cooler element.

According to an embodiment of the present invention, it is preferred that the absorber element comprises an adiabatically operated absorption column, especially an adiabatically operated HCI-absorption column.

Thereby, it is possible that the acid component may be separated from the off-gas inside the absorber element in a particularly efficient manner. However, alternatively it is also conceivable that other types of scrubbers may be employed as the absorber element.

According to an embodiment of the present invention, the system is configured such that, in addition to the off-gas, a first liquid stream is fed to the absorber element,
wherein the absorber element is configured such that the first liquid stream absorbs at least part of the acid component from the off-gas, yielding a liquid, wherein the liquid comprises regenerated acid, especially regenerated HCI, preferably with a concentration between 15 wt.% and 21,5 wt.%, more preferably between 18 wt.% and 20 wt.%,
wherein preferably the system is configured such that the liquid, comprising the regenerated acid, is taken from the absorber element and is sent or delivered to a storage.

Thereby, it is advantageously possible according to an embodiment of the present invention that regenerated acid is obtained in the absorber element. Said regenerated acid may be transferred from the absorber element into a storage (e.g., by means of a pump) such that it may be reused. Accordingly, a particularly resource-efficient process may be obtained.

Additionally or alternatively, it is conceivable according to an embodiment of the present invention that the system (and in particular the absorber element) is configured such that the first liquid stream is fed to the absorber element at an upper part of the absorber element, wherein the off-gas is fed to the absorber element at a lower part of the absorber element, wherein a flow direction of the first liquid stream inside the absorber element is opposite to a flow direction of the off-gas inside the absorber element.

Therein, the terms "upper" and "lower" especially refer to the installed situation of the absorber element on site. In particular, for the installed absorber element, the upper part is located further away from the ground than the lower part.

According to an embodiment of the present invention, the absorber element is configured such that between 96% and 99,8% more preferable between 99,0 and 99,5 % of the acid component, comprised in the off-gas when entering the absorber element, are removed from the off-gas inside the absorber element.

According to an embodiment of the present invention, it is preferred that the off-gas, especially when entering the absorber element, has a temperature between 90°C and 105°C, preferably between 95°C and 98°C, and/or
that the first resulting off-gas, especially when exiting the absorber element, has a temperature between 80°C and 95°C, preferably between 83°C and 87°C.

Thereby, it is conceivable that the main washing or cleaning step (performed in the absorber element) is separated from the main (final) cooling step, which occurs in the cooler element.

According to an embodiment of the present invention, it is preferred that the cooler element comprises a column, especially with a packing.

According to an embodiment of the present invention, it is preferred that the cooler element is configured such that - in the cooler element - the first resulting off-gas is cooled by means of a second liquid stream that is fed to the cooler element.

According to an embodiment of the present invention, it is preferred that the first resulting off-gas, especially when entering the cooler element, has a temperature between 80°C and 95°C, preferably between 83°C and 87°C, and/or
wherein the second resulting off-gas, especially when exiting the cooler element, has a temperature between 40°C and 60°C, preferably between 45°C and 52°C.

According to an embodiment of the present invention, it is preferred that the system is configured such that the second liquid stream is fed to the cooler element at an upper part of the cooler element, wherein a lower part of the cooler element is located below the upper part, wherein the cooler element is configured such that the second liquid stream flows inside the cooler element from the upper part to the lower part such that a third liquid stream, comprising at least part of the second liquid stream, is yielded at the lower part of the cooler element, wherein especially a flow direction of the second liquid stream inside the cooler element is opposite to a flow direction of the first resulting off-gas inside the cooler element.

The terms "upper" and "lower" therein especially refer to the installed situation of the cooler element on site. In particular, for the installed cooler element, the upper part is located further away from the ground (that the cooler element is located on) than the lower part.

According to an embodiment of the present invention, the cooler element is configured such that - while cooling the first resulting off-gas in the cooler element -,
-- at least part of a water vapor component, comprised in the first resulting off-gas after the absorber element, condenses and is absorbed by the second liquid stream, and/or
-- the second liquid stream absorbs at least a part of a remaining acid component, comprised in the first resulting off-gas after the absorber element,
such that the third liquid stream, yielded at the lower part of the cooler element, further comprises at least part of the condensed water vapor component and/or part of the remaining acid component.

Thereby, it is possible according to an embodiment of the present invention that a third liquid stream is obtained in the cooler element, which may be reused as a first liquid stream and/or a second liquid stream in the absorber element and/or cooler element (or in a further system/apparatus). Accordingly, a particularly efficient process may be established.

According to an embodiment of the present invention, it is preferred that the system is configured such that the third liquid stream is fed to a heat exchanger, especially a titanium plate heat exchanger, wherein the heat exchanger is configured such that the third liquid stream is cooled by means of the heat exchanger.

According to an embodiment of the present invention, it is preferred that the system is configured such that - preferably after the third liquid stream is cooled by the heat exchanger -,
-- at least part of the cooled third liquid stream is used and/or reused as the second liquid stream and fed to the cooler element for cooling the first resulting off-gas, and/or
-- at least part of the cooled third liquid stream is used and/or reused as the first liquid stream and fed to the absorber element for absorbing at least part of the acid component from the off-gas.

An efficient circulation of a cooling/washing liquid may be established thereby.

According to the present invention, it is preferred that the first, second and/or third liquid streams comprise water.

It is conceivable that a system/method according to the present invention is realized as a continuous process such that (new) off-gas continuously enters the absorber element and is further treated according to an embodiment of the present invention.

The transfer and/or circulation of the different liquid streams (e.g., the first, second and/or third liquid stream) between the different elements, i.e. the absorber element, the cooler element, and the scrubber element (and potentially the heat exchanger) may, for instance, be realized by means of one or more pumps.

Furthermore, the present invention relates to a method for cleaning an off-gas comprising an acid component and/or for regenerating an acid component comprised in an off-gas, especially for an off-gas of a hydrolysis reactor for processing an acid solution comprising an iron salt, wherein the method comprises at least the following steps:
-- the off-gas is fed to a absorber element, wherein - in the absorber element - at least part of the acid component is removed from the off-gas,
-- a first resulting off-gas, exiting the absorber element, is fed to a cooler element, wherein - in the cooler element - the first resulting off-gas is cooled.

Advantageously, the inventive method can be applied to off-gases resulting from (pyro)hydrolysis steps of a plurality of different waste acid solutions, e.g., resulting from waste metal materials such as precipitation products or leaching products of industrial processes.

According to the present invention, it is especially conceivable that the acid component comprises hydrochloric acid, HCI, and/or that the acid component is HCI.

According to an embodiment of the present invention, especially of the inventive method, it is preferred that the absorber element and the cooler element are arranged separately from each other, and wherein preferably the cooler element is positioned between the absorber element and a scrubber element.

According to an embodiment of the present invention, especially of the inventive method, it is preferred that a second resulting off-gas, exiting the cooler element, is fed to a scrubber element, especially a venturi scrubber, for removing particles and/or liquid drops from the second resulting off-gas, especially before releasing the second resulting off-gas into the environment.

According to an embodiment of the present invention, especially of the inventive method, the absorber element comprises an adiabatically operated absorption column, especially an adiabatically operated HCI-absorption column.

According to an embodiment of the present invention, especially of the inventive method, in addition to the off-gas, a first liquid stream is fed to the absorber element, wherein the first liquid stream absorbs at least part of the acid component from the off-gas, yielding a liquid, wherein the liquid comprises regenerated acid, especially regenerated HCI, preferably with a concentration between 15 wt.% and 21,5 wt.%, more preferably between 18 wt.% and 20 wt.%,
wherein preferably the liquid, comprising the regenerated acid, is taken from the absorber element and is sent or delivered to a storage.

According to an embodiment of the present invention, especially of the inventive method, between 96% and 99,8% more preferable between 99,0 and 99,5% of the acid component, comprised in the off-gas when entering the absorber element, are removed from the off-gas inside the absorber element.

According to an embodiment of the present invention, especially of the inventive method, it is preferred that the off-gas, especially when entering the absorber element, has a temperature between 90°C and 105°C, preferably between 95°C and 98°C, and/or that the first resulting off-gas, especially when exiting the absorber element, has a temperature between 80°C and 95°C, preferably between 83°C and 87°C.

According to an embodiment of the present invention, especially of the inventive method, it is preferred that the cooler element comprises a column, especially with a packing.

According to an embodiment of the present invention, especially of the inventive method, it is preferred that - in the cooler element - the first resulting off-gas is cooled by means of a second liquid stream that is fed to the cooler element.

According to an embodiment of the present invention, especially of the inventive method, it is preferred that the first resulting off-gas, especially when entering the cooler element, has a temperature between 80°C and 95°C, preferably between 83°C and 87°C, and/or
that the second resulting off-gas, especially when exiting the cooler element, has a temperature between 40°C and 60°C, preferably between 45°C and 52°C.

According to an embodiment of the present invention, especially of the inventive method, it is preferred that the second liquid stream is fed to the cooler element at an upper part of the cooler element, wherein a lower part of the cooler element is located below the upper part, wherein the second liquid stream flows inside the cooler element from the upper part to the lower part such that a third liquid stream, comprising at least part of the second liquid stream is yielded at the lower part of the cooler element, wherein especially a flow direction of the second liquid stream inside the cooler element is opposite to a flow direction of the first resulting off-gas inside the cooler element.

The terms "upper" and "lower" therein especially refer to the installed situation of the cooler element on site. In particular, for the installed cooler element, the upper part is located further away from the ground (that the cooler element is located on) than the lower part.

According to an embodiment of the present invention, especially of the inventive method, it is preferred that - while cooling the first resulting off-gas in the cooler element -,
-- at least part of a water vapor component, comprised in the first resulting off-gas after the absorber element, condenses and is absorbed by the second liquid stream, and/or
-- the second liquid stream absorbs at least a part of a remaining acid component, comprised in the first resulting off-gas after the absorber element,
such that the third liquid stream, yielded at the lower part of the cooler element, further comprises at least part of the condensed water vapor component and/or part of the remaining acid component.

According to an embodiment of the present invention, especially of the inventive method, it is preferred that the third liquid stream is fed to a heat exchanger, especially a titanium plate heat exchanger, wherein the third liquid stream is cooled by means of the heat exchanger.

According to an embodiment of the present invention, especially of the inventive method, it is preferred that - preferably after the third liquid stream is cooled by the heat exchanger-,
-- at least part of the cooled third liquid stream is used and/or reused as the second liquid stream and fed to the cooler element for cooling the first resulting off-gas, and/or
-- at least part of the cooled third liquid stream is used and/or reused as the first liquid stream and fed to the absorber element for absorbing at least part of the acid component from the off-gas.

The features, embodiments and advantages described in the context of the inventive method or in the context of an embodiment of the inventive method may also apply to the inventive system. The features, embodiments and advantages described in the context of the inventive system or in the context of an embodiment of the inventive system may also apply to the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a system according to an embodiment of the present invention.
Figure 2 schematically illustrates a system according to an embodiment of the present invention.
Figure 3 schematically illustrates a system according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

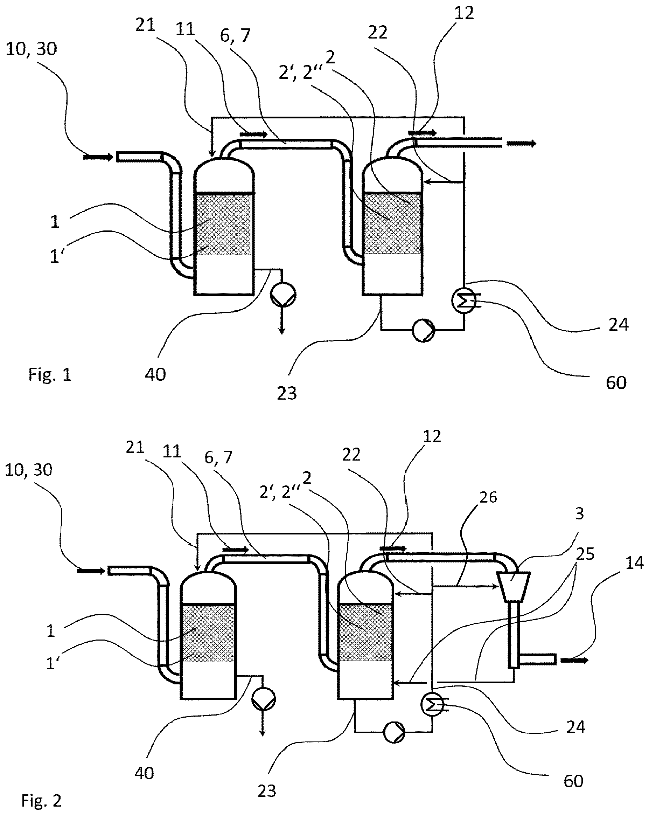

In **Figure 1****,** a system for cleaning an off-gas 10 comprising an acid component 30 and/or for regenerating an acid component 30 comprised in an off-gas 10 according to an embodiment of the present invention is schematically illustrated. The system comprises a absorber element 1 and a cooler element 2, wherein the cooler element 2 is arranged separately from the absorber element 1 downstream of the absorber element 1 (with respect to the flow direction of the off-gas 10). The absorber element 1 preferably comprises an adiabatic column 1' or is an adiabatic column scrubber. A first liquid stream 21 that is fed to the absorber element 1 is employed for cleaning the off-gas 10 inside the absorber element 1. Thereby, the acid component 30, or at least part of it, is separated from the off-gas 10, which enters the absorber element 1, inside the absorber element 1. By means of the first liquid stream 21 and the acid component 30, which is removed from the off-gas 10 and absorbed by the first liquid stream 21, a liquid 40, in particular a regenerated acid, is obtained/generated in the absorber element 1. Said regenerated acid 40 may be taken out of the absorber element 1 for further use. After the off-gas 10 has been cleaned/washed in the absorber element 1, the off-gas, in the form of a first resulting off-gas 11, exits the absorber element 1. By means of a gas-connection 6, comprising a duct or pipe 7, the first resulting off-gas 11 is guided to the cooler element 2 and fed to the cooler element 2. The cooler element 2 comprises a packing 2" filled column 2'. By means of a second liquid stream 22, which is fed to the cooler element 2, the first resulting off-gas 11 is cooled down inside the cooler element 2. At the same time, at least part of a remaining acid component, still comprised in the first resulting off-gas 11 when entering the second scrubber 2, is separated from the first resulting off-gas 11 inside the second scrubber 2 and absorbed by the second liquid stream 22. Thereby, the concentration of acid in the first-resulting off-gas 11 is further reduced inside the cooler element 2. Preferably, the exhaust fume (in particular the first resulting off-gas 11) is cooled down to below 50°C inside the cooler element 2 before it leaves the cooler element 2. At the same time, the flow rate (of the first resulting off-gas 11) is reduced down to approx. 50% inside the cooler element 2. When exiting the cooler element 2, the exhaust fume is referred to as the second resulting off-gas 12, resulting after the cooler element 2. Therein, said second resulting off-gas 12 preferably has temperature of below 50°C.

The process of cooling down the first resulting off-gas 11 inside the cooler element 2 preferably is as follows. The first resulting off-gas 11 is led into the lower section of the column 2' forced by means of a low pressure. The first resulting off-gas 11 passes through the packing 2" in the column 2' to the top of the column 2'. Simultaneously the second liquid stream 22 (in particular comprising or mostly consisting of water) is spread on top of column 2' onto the packing 2". The second liquid stream 22 flows in counter flow direction to the first resulting off-gas 11 through the packing 2", which increases the contact surface between the first resulting off-gas 11 and the second liquid stream 22, so that an improved heat exchange can take place and the first resulting off-gas 11 is cooled efficiently. During this process, the water (in particular the second liquid stream 22) is heated. The hot water, especially comprising at least part of the second liquid stream 22 and part of the remaining acid component, separated from the first resulting off-gas inside the cooler element 2, is collected at the bottom of the column 2', where it forms the third liquid stream 23. From there, the third liquid stream 23 is pumped into a heat exchanger 60, preferably a titanium plate heat exchanger. Inside the heat exchanger 60, the third liquid stream 23 is cooled down. At least part of the cooled third liquid stream 24 is reused as a second liquid stream 22 and is pumped to the cooler element 2 for cooling (further) first resulting off-gas 11. Additionally (or alternatively), at least part of the cooled third liquid stream 24 is reused as a first liquid component 21 and is pumped to the absorber element 1 for absorbing at least part of a (further) acid component 30 from (further) off-gas 10. Thereby, an improved and efficient water cycle is established.

Preferably, the first, second and third liquid streams 21, 22, 23, 24 comprise water. The acid component 30, comprised in the off-gas 10, (and thereby also the regenerated acid 40 as well as the remaining acid component, remaining in the first resulting off-gas 11 after the absorber element 1) preferably is hydrochloric acid, HCI.

In **Figure 2** a system according to an embodiment of the present invention is schematically illustrated. The embodiment illustrated in Figure 2 resembles the embodiment disclosed in Figure 1 and additionally comprises the following features/amendments. The second resulting off-gas 12, exiting the cooler element 2, is fed to a scrubber element 3 (or venturi scrubber). In particular, the scrubber element is a Venturi scrubber 3. By means of the downstream positioned scrubber element/Venturi scrubber 3, remaining water droplets, containing HCI and Dust particles, are removed from the gas stream (i.e., from the second resulting off-gas 12). After fine washing/cleaning in the Venturi scrubber 3, the resulting cleaned off-gas 14, may be released. It is conceivable, that part of the cooled third liquid stream 24 is fed to the scrubber element 3 and used in the scrubber element 3. Furthermore, it is conceivable that part of the cooled third liquid stream 24 is fed to the scrubber element 3 as third liquid stream 26 fed to the scrubber element 3.

Additionally or alternatively, it is conceivable that part (or all) of the resulting off-gas component 25, exiting the scrubber element 3, is fed to the cooler element 2 for a further cooling and/or cleaning step.

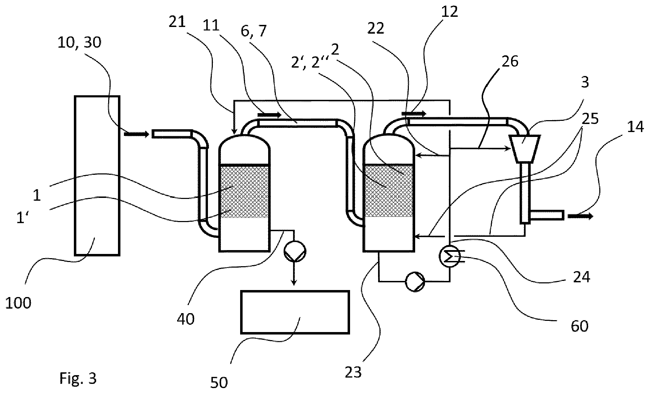

In **Figure 3** a system according to an embodiment of the present invention is schematically illustrated. The embodiment illustrated in Figure 3 resembles the embodiment disclosed in Figure 2 and additionally comprises the following features/amendments. A hydrolysis reactor 100, in particular a pyrohydrolysis reactor such as a spray roaster or a fluidized bed reactor, especially for processing an acid solution comprising an iron salt, is schematically illustrated. Other types of reactors 100 could be used as well. The off-gas 10 is generated or formed in the reactor 100. Before being fed to the absorber element 1, said off-gas 10, exiting the reactor 100, may (or may not) be led through further apparatuses according to some embodiments of the present invention. Moreover, a storage 50 for storing the liquid 40, in particular the regenerated acid 40, which is formed in the absorber element 1 is schematically illustrated. The regenerated acid 40 may be transferred from the absorber element 1 into the storage 50, e.g., by means of a pump.

### REFERENCE SIGNS

- 1: absorber element
- 1': column
- 2: cooler element
- 2': column
- 2": packing
- 3: scrubber element
- 6: gas-connection
- 7: duct or pipe
- 10: off-gas
- 11: first resulting off-gas
- 12: second resulting off-gas
- 14: cleaned off-gas
- 21: first liquid stream
- 22: second liquid stream
- 23: third liquid stream
- 24: cooled third liquid stream
- 25: resulting off-gas component
- 26: third liquid stream fed to the scrubber element
- 30: acid component
- 40: liquid
- 50: storage
- 60: heat exchanger
- 100: reactor

## Claims

1. System for cleaning an off-gas (10) comprising an acid component (30) and/or for regenerating an acid component (30) comprised in an off-gas (10), especially for an off-gas of a hydrolysis reactor for processing an acid solution comprising an iron salt, wherein the system comprises an absorber element (1) - especially a scrubber or an absorber -, wherein the system is configured such that the off-gas (10) is fed to the absorber element (1), wherein the absorber element (1) is configured such that - in the absorber element (1) - at least part of the acid component (30) is removed from the off-gas (10),
wherein the system comprises a cooler element (2), wherein the system is configured such that a first resulting off-gas (11), exiting the absorber element (1), is fed to the cooler element (2), wherein the cooler element (2) is configured such that - in the cooler element (2) - the first resulting off-gas (11) is cooled.

2. System according to claim 1, wherein the absorber element (1) and the cooler element (2) are arranged separately from each other, and wherein preferably the cooler element (2) is positioned between the absorber element (1) and a scrubber element (3). System according to any one of the preceding claims, wherein the system is configured such that a second resulting off-gas (12), exiting the cooler element (2), is fed to a scrubber element (3), especially a venturi scrubber, for removing particles and/or liquid drops from the second resulting off-gas (12), especially before releasing the second resulting off-gas (12) into the environment.

3. System according to any one of the preceding claims, wherein the absorber element (1) comprises an adiabatically operated absorption column (1'), especially an adiabatically operated HCI-absorption column.

4. System according to any one of the preceding claims, wherein the system is configured such that, in addition to the off-gas (10), a first liquid stream (21) is fed to the absorber element (1), wherein the absorber element (1) is configured such that the first liquid stream (21) absorbs at least part of the acid component (30) from the off-gas (10), yielding a liquid (40), wherein the liquid (40) comprises regenerated acid, especially regenerated HCI, preferably with a concentration between 15 wt.% and 21,5 wt.%, more preferably between 18 wt.% and 20 wt.%,
wherein preferably the system is configured such that the liquid (40), comprising the regenerated acid, is taken from the absorber element (1) and is sent or delivered to a storage (50).

5. System according to any one of the preceding claims, wherein the absorber element (1) is configured such that between 96% and 99,8% more preferable between 99,0 and 99,5 % of the acid component (30), comprised in the off-gas (10) when entering the absorber element (1), are removed from the off-gas (10) inside the absorber element (1).

6. System according to any one of the preceding claims, wherein the off-gas (10), especially when entering the absorber element (1), has a temperature between 90°C and 105°C, preferably between 95°C and 98°C, and/or
wherein the first resulting off-gas (11), especially when exiting the absorber element (1), has a temperature between 80°C and 95°C, preferably between 83°C and 87°C.

7. System according to any one of the preceding claims, wherein the cooler element (2) comprises a column (2'), especially with a packing (2").

8. System according to any one of the preceding claims, wherein the cooler element (2) is configured such that - in the cooler element (2) - the first resulting off-gas (11) is cooled by means of a second liquid stream (22) that is fed to the cooler element (2).

9. System according to any one of the preceding claims, wherein the first resulting off-gas (11), especially when entering the cooler element (2), has a temperature between 80°C and 95°C, preferably between 83°C and 87°C, and/or
wherein the second resulting off-gas (12), especially when exiting the cooler element (2), has a temperature between 40°C and 60°C, preferably between 45°C and 52°C.

10. System according to any one of claims 9 to 10, wherein the system is configured such that the second liquid stream (22) is fed to the cooler element (2) at an upper part of the cooler element (2), wherein a lower part of the cooler element (2) is located below the upper part, wherein the cooler element (2) is configured such that the second liquid stream (22) flows inside the cooler element (2) from the upper part to the lower part such that a third liquid stream (23), comprising at least part of the second liquid stream (22), is yielded at the lower part of the cooler element (2), wherein especially a flow direction of the second liquid stream (22) inside the cooler element (2) is opposite to a flow direction of the first resulting off-gas (11) inside the cooler element (2).

11. System according to claim 11, wherein the cooler element (2) is configured such that - while cooling the first resulting off-gas (11) in the cooler element (2) -,
-- at least part of a water vapor component, comprised in the first resulting off-gas (11) after the absorber element (1), condenses and is absorbed by the second liquid stream (22), and/or
-- the second liquid stream (22) absorbs at least a part of a remaining acid component, comprised in the first resulting off-gas (11) after the absorber element (1),
such that the third liquid stream (23), yielded at the lower part of the cooler element (2), further comprises at least part of the condensed water vapor component and/or part of the remaining acid component.

12. System according to any one of claims 11 to 12, wherein the system is configured such that the third liquid stream (23) is fed to a heat exchanger (60), especially a titanium plate heat exchanger (60), wherein the heat exchanger (60) is configured such that the third liquid stream (23) is cooled by means of the heat exchanger (60).

13. System according to any one of claims 11 to 13, wherein the system is configured such that - preferably after the third liquid stream (23) is cooled by the heat exchanger (60) -,
-- at least part of the cooled third liquid stream (24) is used and/or reused as the second liquid stream (22) and fed to the cooler element (2) for cooling the first resulting off-gas (11), and/or
-- at least part of the cooled third liquid stream (24) is used and/or reused as the first liquid stream (21) and fed to the absorber element (1) for absorbing at least part of the acid component (30) from the off-gas (10), and/or
-- at least part of the cooled third liquid stream (24) is used and/or reused as the third liquid stream (26) fed to the scrubber element (3) for absorbing at least part of the remaining acid component (30) from the off-gas (10)..

14. Method for cleaning an off-gas (10) comprising an acid component (30) and/or for regenerating an acid component (30) comprised in an off-gas (10), especially for an off-gas of a hydrolysis reactor for processing an acid solution comprising an iron salt, wherein the method comprises at least the following steps:
-- the off-gas (10) is fed to an absorber element (1), wherein - in the absorber element (1) - at least part of the acid component (30) is removed from the off-gas (10),
-- a first resulting off-gas (11), exiting the absorber element (1), is fed to a cooler element (2), wherein - in the cooler element (2) - the first resulting off-gas (11) is cooled
-- a second resulting cooled off-gas, exiting the cooler element (2), is fed to a scrubber element (3), wherein - in the scrubber element (3) - the remaining acid component (30) is removed.
